# EUROPEAN PATENT SPECIFICATION

(11) **EP 4 159 508 B1**
(45) Date of publication and mention of the grant of the patent: **28.08.2024**
(21) Application number: 22208274.5
(22) Date of filing: 29.12.2018
(51) Int. Cl.: B60K 1/04, H01M 50/20, B60L 53/80, B60L 50/64, H01M 50/204, H01M 50/249, H01M 50/262

(54) **LOCKING MECHANISM FOR A BATTERY PACK, QUICK-SWAP SUPPORT FRAME ASSEMBLY AND ELECTRIC VEHICLE**
VERRIEGELUNGSMECHANISMUS FÜR EIN BATTERIEPACK, SCHNELLWECHSEL-STÜTZRAHMENANORDNUNG UND ELEKTROFAHRZEUG
MÉCANISME DE VERROUILLAGE POUR UN BLOC-BATTERIE, ENSEMBLE CADRE DE SUPPORT À REMPLACEMENT RAPIDE ET VÉHICULE ÉLECTRIQUE

(30) Priority: 29.12.2017 CN 201711478821; 29.12.2017 CN 201711478874
(43) Date of publication of application: 05.04.2023
(62) Divisional of application: 18895455.6
(73) Proprietor: Shanghai Dianba New Energy Technology Co., Ltd., Shanghai 201308 (CN); Aulton New Energy Automotive Technology Group, Shanghai 201315 (CN)
(72) Inventor: ZHANG, Jianping, Shanghai, 201308 (CN); HUANG, Chunhua, Shanghai, 201308 (CN); LAN, Zhibo, Shanghai, 201308 (CN)
(74) Representative: Hannke Bittner & Partner mbB Regensburg

(56) References cited:
- CN-U- 202 743 033
- CN-U- 205 736 878
- CN-U- 206 186 768

## Description

This application claims priority of Chinese patent applications CN201711478821.6 and CN201711478874.8, filed on December 29, 2017.

### Field of invention

The present invention relates to a locking mechanism for a battery pack, a lock assembly, a quick-swap support frame assembly, and an electric vehicle.

### Prior arts

The existing battery pack installation methods of electric vehicles are generally divided into a fixed type and a replaceable type, wherein the fixed battery pack is generally fixed on the car, and the car is directly used as the charging object when charging. While the replaceable battery pack is generally mounted in an active installation manner, and the battery pack can be removed at any time and replaced with a new battery pack. In the process of replacing a new battery pack, the locking and unlocking of the battery pack is involved. Generally speaking, the left and right sides of the battery pack are equipped with lock shafts; lock devices are fixed on a quick-swap support frame to assemble into a quick-swap support frame assembly, and then the quick-swap support frame assembly is mounted on the chassis of the electric vehicle together; the lock shafts coordinate with the lock device to achieve the locking of the battery pack. However, the existing locking device only includes a primary locking, resulting in a lack of locking protection, and once a fault occurs and the locking fails, the battery pack may fall, which brings great security risks.

CN202743033U discloses a locking mechanism. The locking mechanism comprises a lock base and a lock tongue, and the lock tongue is rotatable relative to the lock base. The lock tongue includes a lock mouth for locking the locked object, and the lock tongue has a locked state and an unlocked state. The lock tongue is locked in the locked state through the positioning unit. One end of the operating lever is connected with the positioning unit, and the operator can make the positioning unit rotate by pulling the operating lever to complete the unlocked process. The locking tongue recovers from the locked state to the unlocked state under the action of the first elastic element.

### Content of the present invention

The invention is as defined in claim 1.

The technical problem to be solved by the present invention is to overcome the defects in the prior art that the power exchange robot has poor unlock accuracy and poor battery replacement efficiency during the power exchange process. Provided are a locking mechanism, a quick-swap frame assembly and an electric vehicle.

The positive effects of the present invention lie in that:
As for the locking mechanism, quick-swap support frame assembly and electric vehicle disclosed in the present invention, the resetting part is provided to facilitate the reset of the lock tongue from the unlocked state to the locked state, so that the battery pack is easy to install and lock, and under the action of the resetting part, the lock tongue will not easily change to the unlocked state, and the locking is more reliable; the locking mechanism can provide a secondary locking or locking protection function for the battery pack, which is used to prevent the battery pack from falling when the existing device fails to lock and improve safety performance.

### Brief description of the drawings

Fig. 1 is a schematic perspective view of the locking mechanism according to Embodiment 1 of the present invention;
Fig. 2 is a schematic front view of the locking mechanism according to Embodiment 1 of the present invention, wherein the lock shaft is also shown;
Fig. 3 is a schematic cross-sectional view of the lock base according to Embodiment 1 of the present invention;
Fig. 4 is an internal schematic diagram of the locking mechanism according to Embodiment 1 of the present invention, wherein the lock base is shown in cross section;
Fig. 5 is a schematic plan view of the locking mechanism according to Embodiment 1 of the present invention;
Fig. 6 is a schematic perspective view of the resetting part according to Embodiment 1 of the present invention;
Fig. 7 is a schematic perspective view of the elastic part according to Embodiment 1 of the present invention;
Fig. 8 is a partial schematic view of the quick-swap support frame assembly according to Embodiment 1 of the present invention;
Fig. 9 is another partial schematic view of the quick-swap support frame assembly according to Embodiment 1 of the present invention, part of which overlaps with Fig. 8;
Fig. 10 is a perspective schematic view of the resetting part according to Embodiment 2 of the present invention;
Fig. 11 is a schematic perspective view of the locking mechanism according to Embodiment 3 of the present invention;
Fig. 12 is a schematic front view of the locking mechanism according to Embodiment 3 of the present invention;
Fig. 13 is a schematic plan view of the locking mechanism according to Embodiment 3 of the present invention;
Fig. 14 is a schematic cross-sectional view of the locking mechanism according to Embodiment 3 of the present invention;
Fig. 15 is a schematic cross-sectional view of the lock base according to Embodiment 3 of the present invention;
Fig. 16 is a schematic perspective view of the lock tongue according to Embodiment 3 of the present invention;
Figs. 17a to 17e show the installation process of the lock shaft according to Embodiment 3 of the present invention;
Fig. 18 is a perspective schematic view of the locking mechanism according to Embodiment 4 of the present invention at an angle;
Fig. 19 is a schematic perspective view showing the resetting part at the same angle as Fig. 18;
Fig. 20 is a perspective schematic view of the locking mechanism according to Embodiment 4 of the present invention from another angle;
Fig. 21 is a schematic rear view of the locking mechanism according to Embodiment 4 of the present invention;
Fig. 22 is a perspective schematic view of the locking mechanism according to Embodiment 5 of the present invention;
Fig. 23 is a schematic cross-sectional view of the locking mechanism of Embodiment 5 of the present invention;
Fig. 24 is a perspective schematic view of the locking mechanism according to Embodiment 6 of the present invention;
Fig. 25 is a schematic cross-sectional view of the locking mechanism according to Embodiment 6 of the present invention;
Fig. 26 is a perspective schematic view of the lock assembly according to Embodiment 7 of the present invention;
Fig. 27 is a partial schematic view of the quick-swap support frame assembly according to Embodiment 8 of the present invention;
Fig. 28 is another partial schematic view of the quick-swap support frame assembly according to Embodiment 8 of the present invention, part of which overlaps with Fig. 27.

Description of reference signs in the drawings:
Reference signs shared by embodiment 1 and embodiment 2:
   100: locking mechanism; 110: lock base; 111: opening; 112: cavity; 113: groove; 114: unlocking hole; 1141: stepped part; 115 : positioning hole; 116: mounting hole; 120: lock tongue; 130:resetting part; 131: contact part; 132: connection part; 133: spiral part; 140: rotating shaft; 150: inner limiting part; 160: centering shaft; 170: unlocking component; 171: unlocking spring; 172 unlocking head; 173 unlocking rod; 180: elastic part; 181: elastic pad; 182: elastic handle; 183: elastic head; 190: positioning pin; 200: lock shaft; 30: quick-swap support frame assembly; 300: primary locking mechanism; 310: primary lock base; 311: primary opening; 312: primary cavity; 320: primary lock tongue; 330: lock connecting rod; 400: supporting device; 500: quick-swap support frame
Reference signs shared by embodiments 3-8:
   100: locking mechanism; 110: lock base; 111: opening; 112: cavity; 113: first limiting surface;114: first concave part; 115: groove; 116: centering hole; 117: positioning hole; 118: mounting hole; 119: first spring hole; 120: lock tongue; 121: lock tongue body; 122: lock tongue extension part; 123: second limiting surface; 124: second convex part; 125: second spring hole; 130: resetting part; 131: first spring part; 132:secong spring part; 133: middle spiral part; 140: centering shaft; 150: positioning pin; 160: elastic part; 161: elastic part; 162: elastic handle; 163: elastic head; 200:lock shaft; 300: unlocking mechanism; 310: limiting part; 320: accommodating space; 40: quick-swap support frame; 400: primary locking mechanism; 410: primary lock base; 411: primary opening ;412: primary cavity; 420: primary lock tongue; 430: lock connecting rod; 500: supporting device; 600: quick-swap support frame

### Detailed description of the preferred embodiment

The followings are preferred embodiments, and the present invention will be described more clearly and completely in combination with the accompanying drawings.

### Embodiment 1

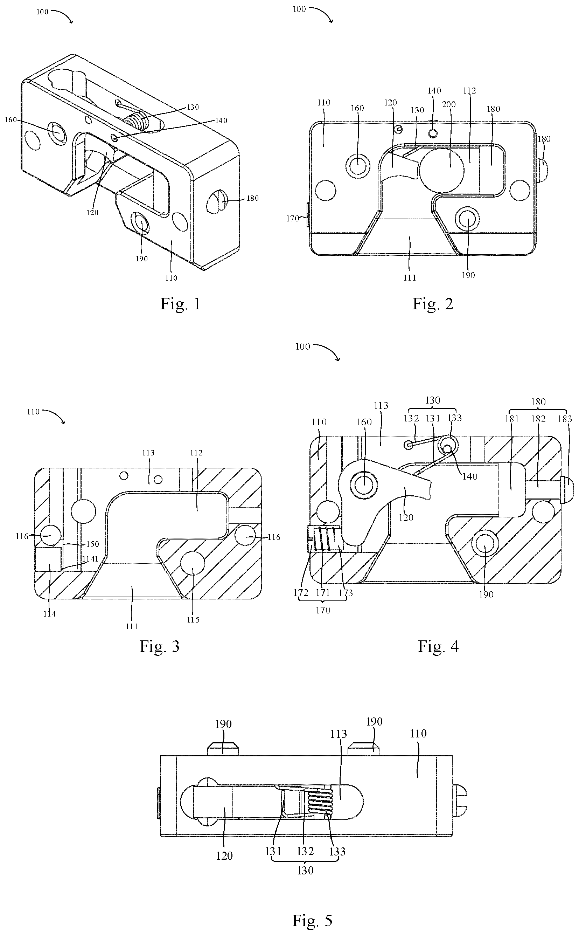

As shown in Figs. 1-7, this embodiment discloses a locking mechanism 100 for a battery pack (not shown). The locking mechanism 100 comprises: a lock base 110, a lock tongue 120, and a resetting part 130. The lock base 110 is provided with an opening 111 and a cavity 112 extending from the opening 111, the opening 111 is used for allowing a lock shaft 200 mounted on the battery pack to enter the cavity 112. The lock tongue 120 is rotatable relative to the lock base 110 so as to shift between an unlocked state and a locked state. When the lock tongue 120 is in the locked state, that is, the state shown in Fig. 1, Fig. 2 and Fig. 4, the lock tongue 120 can stop the lock shaft 200 from leaving the cavity 112 via the opening 111. The resetting part 130 is provided on the lock base 110 and acts on the lock tongue 120, the resetting part 130 is capable of producing a flexible distension and used to cause the lock tongue 120 to rotate in a locking direction so as to reset from the unlocked state to the locked state. This embodiment further discloses a quick-swap support frame assembly which comprises a quick-swap support frame and the locking mechanism 100, the locking mechanism 100 is fixed on the quick-swap support frame; the quick-swap support frame is generally a frame-shaped structure, and the locking mechanism 100 is fixed in the frame of the frame-shaped structure. The quick-swap support frame may also be a plate-shaped structure, and the locking mechanism 100 may be fixed to the lower surface of the plate-shaped structure. At the same time, This embodiment further discloses an electric vehicle which comprises a chassis (not shown), a battery pack and the quick-swap support frame assembly, the quick-swap support frame assembly is fixed to the chassis, the battery pack is mounted in the quick-swap support frame assembly, and the lock shaft 200 mounted on the battery pack is located within the cavity 112.

As mentioned above, the resetting part 130 is provided to facilitate the reset of the lock tongue 120 from the unlocked state to the locked state, so that the battery pack is easy to install and lock, and under the action of the resetting part 130, the lock tongue 120 will not easily change to the unlocked state, and the lock is more reliable; the locking mechanism 100 can provide a secondary locking or locking protection function for the battery pack, which is used to prevent the battery pack from falling when the existing device fails to lock and improve safety performance.

As shown in Figs. 1-4, the opening 111 is optionally a bell mouth, which is convenient for the lock shaft 200 to enter the cavity 112.

In combination with Figs. 5-6, the resetting part 130 is a spring, which has a contact part 131 and a connection part 132. The connection part 132 is provided on the lock base 110, and the contact part 131 contacts the lock tongue 120 to act on the lock tongue 120. The connection part 131 is inserted in the hole of the lock base 110. Specifically, in this embodiment, the resetting part 130 is a torsion spring, the resetting part 130 is further provided with a spiral part 133, and the spiral part 133 is connected to the contact part 131 and the connection part 132, and both the contact part 131 and the connection part 132 are capable of rotating around the spiral part 133 to achieve the change of the elastic force. The resetting of the resetting part 130 is specially implemented by virtue of the change of the elastic force of the spiral part 133, so that the resetting of the lock tongue 120 to the locked state is implemented. In an alternative embodiment, the resetting part may not have a spiral part, and the contact part and the connection part may be directly connected and in bent shaped, and the principle is similar to the elastic sheet, and the elastic deformation is also used to achieve the reset. In this embodiment, as shown in Figs. 5-6, the contact part 131 and the connection part 132 are connected to two ends of the spiral part 133, respectively.

At the same time, in order to restrict the range of motion of the spiral part 133, the locking mechanism 100 further includes a rotating shaft 140, the rotating shaft 140 is provided on the lock base 110, and the spiral part 133 is sleeved on the rotating shaft 140. Thereby the resetting part 130 will not detach from the lock base 110 during use.

In this embodiment, the rotating shaft 140 is a hollow shaft made of thin sheets.

As can be seen from Figs. 1-2 and 4-5, the resetting part 130 is provided above the lock tongue 120. Compared with the structure in which the resetting part is provided under the lock tongue, it is possible to prevent the gravity of the lock tongue 120 from causing resistance to resetting of the resetting part 130; in addition, this layout also facilitates the lock shaft 200 to enter the cavity 112 from below.

In addition, the locking mechanism 100 also comprises an inner limiting part 150, a centering shaft 160, an unlocking component 170 and a positioning pin 190. The lock base 110 is provided with a groove 113, an unlocking hole 114, a positioning hole 115 and a mounting hole 116. The following will explain in detail with reference to the drawings.

As shown in Figs. 3-4, when the lock tongue 120 is in the locked state, the inner limiting part 150 abuts against the lock tongue 120 to stop the lock tongue 120 from continuing to rotate in the locking direction. In this embodiment, the inner limiting part 150 is specifically an inner surface of the cavity 112 defined by the lock base 110. The structure is simple and ingenious, and no extra parts are needed to ensure that the lock tongue 120 stays in the locked state.

As shown in Figs. 1 and 3-5, the groove 113 is provided on the top of the lock base 110, the groove 113 is in communication with the cavity 112, and the resetting part 130 is at least partially located within the groove 113. In the state shown in the figure, the resetting part 130 is also partially located in the cavity 112. The lock tongue 120 is at least partially located within the groove 112, and the lock tongue 120 is capable of entering the cavity 112 via the groove 113. In this way, the lock tongue 120 can be mounted through the groove 113. During the transition between the locked state and the unlocked state, the lock tongue 120 can enter and exit the groove 113.

As shown in Figs. 1-2 and 4, the centering shaft 160 is provided on the lock base 110 and passes through the lock tongue 120, the lock tongue 120 is capable of rotating about the centering shaft 160.

As shown in Figs. 2-5, the unlocking component 170 is provided in the unlocking hole 114, and one end of the unlocking component 170 is in contact with the lock tongue 120. The unlocking component 170 is capable of acting on the lock tongue 120 to cause the lock tongue 120 to rotate in an unlocking direction to change from the locked state to the unlocked state, thereby the unlocking component can conveniently complete the unlocking. In the orientation in the figures, the right end of the unlocking member 170 is in contact with the lock tongue 120, and the unlocking direction is counterclockwise. Specifically, the unlocking component 170 comprises an unlocking spring 171, and an unlocking head 172 and an unlocking rod 173 connected to each other. The unlocking hole 114 is a stepped hole, and a stepped part 1141 is provided within the unlocking hole 114, the inner diameter of the inner end of the unlocking hole 114 is smaller than the inner diameter of the outer end of the unlocking hole 114. The unlocking spring 171 is at least partially located within the unlocking hole 114, and two ends of the unlocking spring 171 respectively abut against the unlocking head 172 and the stepped part 1141. In the initial stage of unlocking, as shown in Fig. 4, two ends of the unlocking spring 171 have not yet abutted against the unlocking head 172 and the stepped part 1141, however, as the unlocking component 170 moves from left to right, two ends of the unlocking spring 171 will abut against the unlocking head 172 and the stepped part 1141. The unlocking spring acts as a buffer, and after the unlocking is completed, the unlocking spring 171 can also use its own elastic force to reset the unlocking head 172 and the unlocking rod 173 to the left without interfering with the lock tongue 120 being reset to the locked state by rotating clockwise.

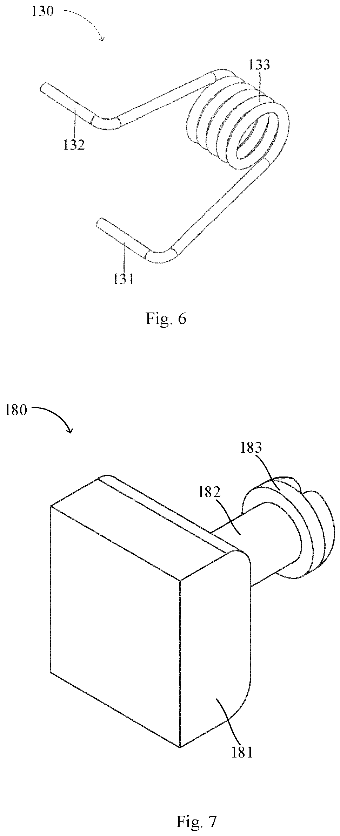

As shown in Figs. 4 and 7, the elastic part 180 is at least partially located within the cavity 120, and the elastic part 180 is used to abut against the lock shaft 200. The elastic part 180 does not necessarily need to be in contact with the lock shaft 200, but once in contact, the elastic part 180 can prevent the lock shaft 200 from rigidly colliding with the lock base 110. Specifically, the elastic part 180 comprises an elastic pad 181, an elastic handle 182, and an elastic head 183. The elastic pad 181 is located within the cavity 112, and the elastic pad 181 is used to abut against the lock shaft 200. The elastic handle182 and the elastic head 183 are connected in sequence, the elastic handle 182 passes through the lock base 110, and the wall part of the lock base 110 is clamped between the elastic pad 181 and the elastic head 183. In this way, the entire elastic part 180 can be firmly mounted on the lock base 110. The elastic member 180 is optionally made of rubber.

As shown in Fig. 5, the positioning pin 190 is partially located outside the positioning hole 115, and the positioning pin 190 and the positioning hole 115 are in interference fit. The positioning pin 190 can be used for positioning when the locking mechanism 100 is mounted on the quick-swap support frame.

As shown in Fig. 3, the mounting hole 116 is optionally a threaded hole. A threaded fastener can pass through the mounting hole 116 to mount the locking mechanism 100 to the quick-swap support frame.

Next, referring mainly to Figs. 2 and 4, a brief description of the working process of the locking mechanism 100, which mainly comprises an unlocking process and a locking process, wherein the initial state is the locked state.

Unlocking process: applying a rightward force to the unlocking head 172, and the unlocking rod 173 acts on the lock tongue 120, so that the lock tongue 120 rotates counterclockwise; the lock tongue 120 acts on the contact part 131 of the resetting part 130, so that the elastic force of the resetting part 130 changes; after the lock tongue 120 rotates to a certain angle, a channel in the cavity 112 for the locking shaft 200 to pass through is formed; the lock shaft 200 may move from right to left, and then move downward through the opening 111 to leave the locking mechanism 100.

Locking process: the lock shaft 200 moves upward under the action of external force, enters the cavity 112 through the opening 111, and the lock shaft 200 acts on the lock tongue 120 so that the lock tongue 120 rotates counterclockwise; the lock tongue 120 acts on the contact part 131 of the resetting part 130, so that the elastic force of the resetting part 130 changes; after the lock tongue 120 rotates to a certain angle, a channel in the cavity 112 for the lock shaft 200 to pass through is formed, and the lock shaft 200 can move from left to right; until the lock shaft 200 is no longer in contact with the lock tongue 120, the lock tongue 120 rotates clockwise under the action of the resetting part 130 to reset to the locked state.

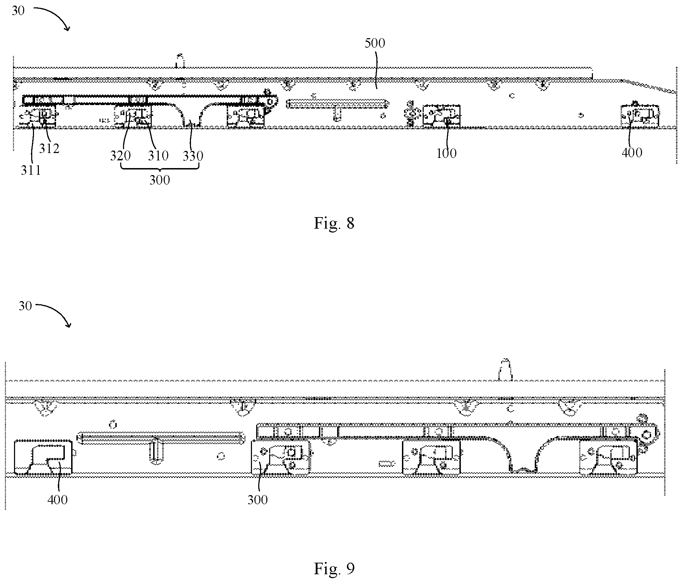

The quick-swap support frame assembly 30 that uses the locking mechanism 100 as the secondary locking mechanism and further includes the primary locking mechanism 300 is described below with reference to Figs. 8 and 9.

The primary locking mechanism 300 comprises a lock connecting rod 330, at least one primary lock tongues 320, and at least one primary lock bases 310. The primary lock base 310 is fixed on the quick-swap support frame 500. In this embodiment, the two sides of the frame of the quick-swap support frame 500 are provided with three primary lock bases 310 and three primary lock tongues 320 on each side. Figs. 8 and 9 are partial schematic diagrams on one side.

The primary lock base 310 is provided with a primary opening 311 and a primary cavity 312 extending from the primary opening 311, the primary opening 311 is used for a primary lock shaft (the structure is the same as or similar to the lock shaft 200) mounted on the battery pack to enter the primary cavity 312. The lock connecting rod 330 is rotatably connected with at least one of the primary lock tongues 320, and is used to drive the primary lock tongue 320 to rotate under the action of external force, so that the primary lock tongue 320 can rotate relative to the primary lock base 310 to change between a primary unlocked state and a primary locked state, when the primary lock tongue 320 is in the primary locking state, the primary lock tongue 320 can stop the primary lock shaft from leaving the primary cavity 312 via the primary opening 311. The "primary locked state" refers to the locked state of the primary locking mechanism 300; the "primary unlocked state" refers to the unlocked state of the primary locking mechanism 300.

The primary locking mechanism 300 and the locking mechanism 100 are provided on the same side of the quick-swap support frame 500. That is, the side surface with the primary locking mechanism 300 is also provided with the locking mechanism 100; if two side surfaces are both provided with the primary locking mechanism 300, then the two side surfaces are also provided with the locking mechanism 100. In this embodiment, two sides within the frame of the quick-swap support frame 500, that is, two inner side surfaces facing the battery back are provided with the primary locking mechanism 300, and are also provided with locking mechanism 100

In addition, the quick-swap support frame assembly 30 further comprises a plurality of supporting devices 400, the supporting devices 400 are provided on a side of the quick-swap support frame500 facing the battery pack, and are used to provide a plurality of support points for supporting the battery pack. The supporting devices 400 are also located on the same side as the primary locking mechanism 300 and the locking mechanism 100. The primary locking mechanism 300 overlaps in Figs. 8 and 9, and Figs. 8 and 9 show the supporting devices 400 in different locations.

In this embodiment, the structure of the supporting devices 400 are similar to that of the lock base 110, and has no locking effect, and only serves as a supporting platform for the battery pack. In other embodiments, other similar supporting mechanisms with supporting platforms may also be applicable. The number of supporting devices 400 can be adjusted according to the weight of the actual battery pack, and it is preferable that the average weight supported by each supporting device 400 does not exceed 25 KG.

The supporting devices 400 are provided with a supporting groove, and the lower surface of the supporting groove is on the same plane as the lower surface of the cavity 112 and the lower surface of the primary cavity 312. The lower surface of the support groove, the lower surface of the cavity 112, and the lower surface of the primary cavity 312 all refer to the surface close to the ground when in use, which bears the support role of the special lock shaft for supporting the battery pack only, the lock shaft 200, and the primary lock shaft, and the three are located on the same plane to make the battery pack move smoothly.

The unlocking process and the locking process of the primary locking mechanism 300 and the locking mechanism 100 are similar, and are basically synchronized.

### Embodiment 2

This embodiment discloses a locking mechanism for a battery pack, and its structure is substantially similar to Embodiment 1, and the difference lies in that the structure of the resetting part 130 is different from that of Embodiment 1.

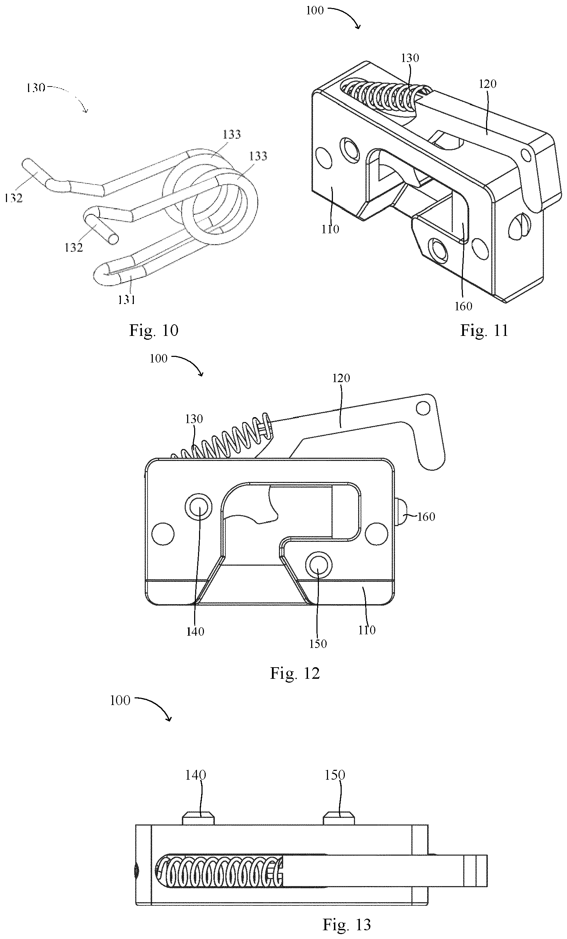

In this embodiment, as shown in Fig. 10, the resetting part 130 comprises two connection parts 132, two spiral parts 133, and one contact part 131. The two connection parts 132 are respectively connected to the outside of the two spiral parts 133, and the contact part 131 is connected between the two spiral parts 133.

### Embodiment 3

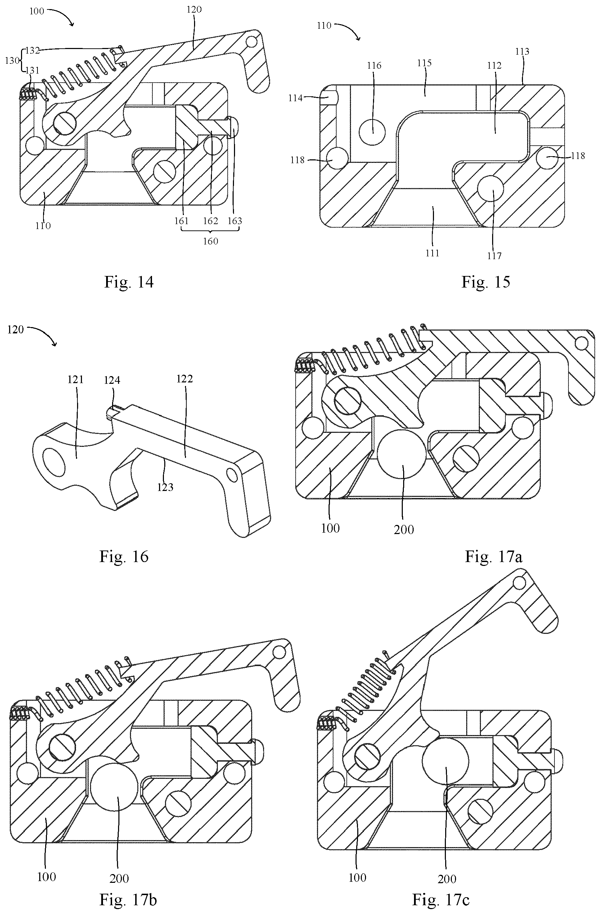

As shown in Figs. 11-14, this embodiment discloses a locking mechanism 100 for a battery pack. The locking mechanism 100 comprises: a lock base 110, a lock tongue 120, and a resetting part 130. Wherein, as shown in Figs. 15-16 and 17a-17e, the lock base 110 is provided with an opening 111 and a cavity 112 extending from the opening 111, the opening 111 is used for allowing a lock shaft 200 mounted on the battery pack to enter the cavity 112. The lock tongue 120 is rotatable relative to the lock base 110 so as to shift between an unlocked state and a locked state. The lock tongue 120 comprises a lock tongue body 121 and a lock tongue extension part 122 that are fixedly connected, the lock tongue extension part 122 is located outside the lock base 110, when the lock tongue 120 is in the locked state, the lock tongue body 121 can stop the lock shaft 200 from leaving the cavity 112 via the opening 111. The resetting part 130 is provided on the lock base 110 and acts on the lock tongue 120, the resetting part 130 is capable of producing a flexible distension and used to cause the lock tongue 120 to rotate in a locking direction so as to reset from the unlocked state to the locked state.

The resetting part 130 is provided to facilitate the resetting of the lock tongue 120 from the unlocked state to the locked state, so that the battery pack is easy to install and lock, and under the action of the resetting part 130, the lock tongue 120 will not easily change to the unlocked state, and the locking is more reliable; the lock tongue extension part 122 provided outside the lock base 110 can realize the rotation of the lock tongue body 121 by acting on the lock tongue extension part 122, which is convenient for unlocking; the locking mechanism 100 can provide a secondary locking or locking protection function for the battery pack, which is used to prevent the battery pack from falling when the existing device fails to lock and improve safety performance.

The opening 111 mentioned-above is a bell mouth, which is convenient for the lock shaft 200 to enter the cavity 112.

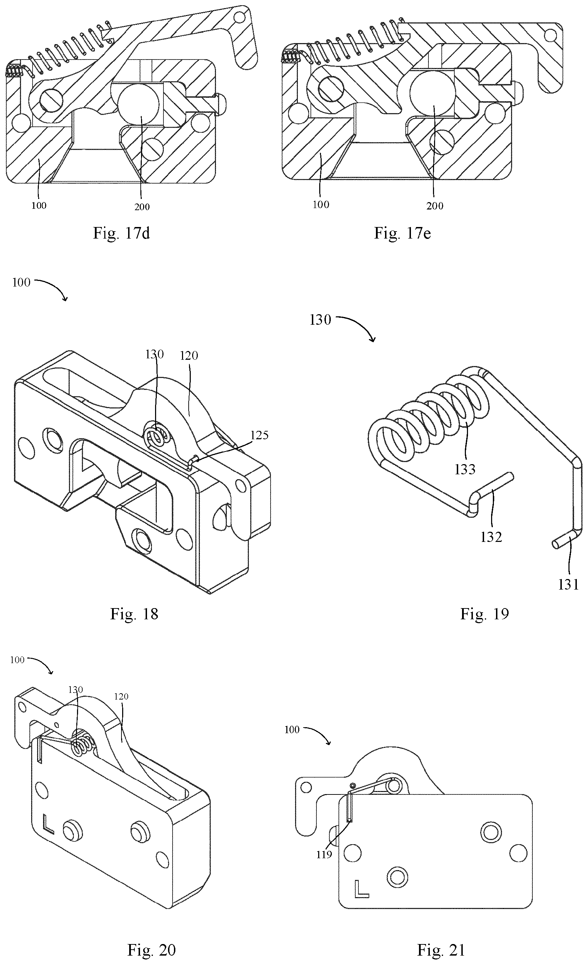

In this embodiment, the lock base 110 has a first limiting surface 113 (marked in Fig. 15), the first limiting surface 113 is an outer surface of the lock base 110 and specifically an upper outer surface of the lock base 110. The lock tongue extension part 122 has a second limiting surface 123 (marked in Fig. 16). The second limiting surface 123 is specifically the lower outer surface of the lock base 110. As shown in Figs. 17a or 17e, when the lock tongue 120 is in the locked state, the first limiting surface 113 abuts against the second limiting surface 123 to stop the lock tongue 120 from continuing to rotate in the locking direction. In Figs. 17a-17e, the locking direction is clockwise. When the lock tongue 120 rotates to the position where the first limiting surface 113 contacts the second limiting surface 123, the lock tongue 120 no longer continues to rotate and stops in the locked state. In an alternative embodiment, other parts of the lock base may contact other parts of the lock tongue to prevent the lock tongue from continuing to rotate.

As shown in Fig. 15, a groove 115 is provided on the top of the lock base 110, and the groove 115 communicates with the cavity 112. In combination with Fig. 14, the lock tongue 120 extends through the groove 115 to facilitate the layout of the lock tongue extension part 122.

As shown in Figs. 11-15, the locking mechanism 100 further comprises a centering shaft 140, the centering shaft 140 is provided on the lock base 110 and passes through the lock tongue body 121, the lock tongue body 121 is capable of rotating about the centering shaft 140. Specifically, the centering shaft 140 passes through the centering hole 116 of the lock base 110. At the same time, the lock base 110 is provided with a positioning hole 117, the locking mechanism 100 further comprises a positioning pin 150, the positioning pin 150 is partially located outside the positioning hole 117, and the positioning pin 150 and the positioning hole 117 are in interference fit. The positioning pin 150 can be used for positioning when the locking mechanism 100 is mounted on the quick-swap support frame. In this embodiment, the centering shaft 140 and the centering hole 116 are also in interference fit, and the centering shaft also is partially located outside of the lock base 110, and also can be used for positioning. In addition, the lock base 110 is provided with a mounting hole 118, the mounting hole 118 is threaded hole. A threaded fastener can pass through the mounting hole 118 to mount the locking mechanism 100 to the quick-swap support frame.

The locking mechanism 100 further comprises an elastic part 160. As shown in Fig. 14, the elastic part 160 is at least partially located within the cavity 112, and the elastic part 160 is used to abut against the lock shaft 200. Specifically, the elastic part 160 comprises an elastic pad 161, the elastic pad 161 is located within the cavity 112, and the elastic pad 161 is used to abut against the lock shaft 200. The elastic part 160 prevents the lock shaft 200 from rigidly colliding with the lock base 110. The elastic part 160 further comprises an elastic handle 162 and an elastic head 163. The elastic pad 161, the elastic handle 162 and the elastic head 163 are connected in sequence, the elastic handle 162 passes through the lock base 110, and the wall part of the lock base 110 is clamped between the elastic pad 161 and the elastic head 163. In this way, the entire elastic part 160 can be firmly mounted on the lock base 110. The elastic member 160 is optionally made of rubber.

Next, in combination with Figs. 11-16, the resetting part 130 of this embodiment is described in detail:
the resetting part 130 has a first spring part 131 and a second spring part 132. The first spring part 131 is connected to the lock base 110, and the second spring part 132 is connected to the lock tongue 120. In this embodiment, the resetting part 130 is a compression spring. The first spring part 131 and the second spring part 132 are two ends of the compression spring. Compression spring has the advantages of convenient processing and low cost.

The lock base 110 is provided with a first concave part 114, and the first spring part 131 is located within the first concave part 114; the lock tongue 120 is provided with a second convex part 124, the second spring part 132 is sleeved on the second convex part 124. Both ends of the compression spring can be reliably connected with the lock base 110 and the lock tongue 120 to prevent ejection. In an alternative embodiment, it may be that: the lock base is provided with a first convex part, and the first spring part is sleeved on the first convex part; the lock tongue is provided with a second convex part, and the second spring part is sleeved on the second convex part; or the lock base is provided with a first convex part, the first spring part is sleeved on the first convex part, the lock tongue is provided with a second concave part, and the second spring part is located within the second concave part; or the lock base is provided with a first concave part, and the first spring part is located within the first concave part; the lock tongue is provided with a second concave part, and the second spring part is located within the second concave part; all of which can achieve a similar effect.

Figs. 17a-17e show the installation process of the lock shaft 200 according to Embodiment 3 of the present invention. In Fig. 17a, the lock tongue 120 is in the locked state, but the lock shaft 200 has not entered the cavity 112 yet. In Fig. 17c, the lock tongue 120 is in the unlocked state or close to the unlocked state, and the lock shaft 200 has partially entered the cavity 112. In Fig. 17e, the lock tongue 120 is in the locked state, and the lock shaft 200 has been completely located within the cavity 112, and the lock shaft 200 is mounted in place.

The following description describes the working principle of the locking mechanism 100 in combination with the figures:
Locking process (i.e., the installation process in Figs. 17a to 17e, the tongue 120 changes from the locked state to the unlocked state and then to the locked state ): from Fig. 17a to Fig. 17c, the lock shaft 200 moves upward under the action of external force, enters the cavity 112 through the opening 111, and the lock shaft 200 acts on the lock tongue body 121 so that the lock tongue 120 rotates counterclockwise; the lock tongue 120 acts on the second spring part 132 of the resetting part 130, so that the elastic force of the resetting part 130 changes; from Fig. 17c to Fig. 17e, after the lock tongue 120 rotates to a certain angle, a channel in the cavity 112 for the lock shaft 200 to pass through is formed, and the lock shaft 200 can move from left to right; until the lock shaft 200 is no longer in contact with the lock tongue body121, the lock tongue 120 rotates clockwise under the action of the resetting part 130 to reset to the locked state.

Unlocking process: applying a upward force to the lock tongue extension part 122, so that the lock tongue 120 rotates counterclockwise; the lock tongue 120 acts on the second spring part 132 of the resetting part 130, so that the elastic force of the resetting part 130 changes; after the lock tongue 120 rotates to a certain angle, a channel in the cavity 112 for the locking shaft 200 to pass through is formed; the lock shaft 200 may move from right to left, and then move downward through the opening 111 to leave the locking mechanism 100.

### Embodiment 4

As shown in Figs. 18-21, the locking mechanism 100 of this embodiment is similar to that of Embodiment 3, except for the structure of the resetting part 130 and the installation location of the resetting part 130; at the same time, the structure of the lock tongue 120 is modified accordingly to avoid collision with the resetting part 130.

In this embodiment, the resetting part 130 is a torsion spring, the resetting part 130 is further provided with a middle spiral part 133, the first spring part 131, the middle spiral part 133 and the second spring part 132 are connected in sequence. Both the first spring part 131 and the second spring part 132 can rotate around the middle spiral part 133 to achieve the change of the elastic force. The lock base 110 is provided with a first spring hole 119, and the first spring part 131 is embedded in the first spring hole 119. The lock tongue 120 is provided with a second spring hole 125, and the second spring part 132 is embedded in the second spring hole 125.

The lock tongue 120 is provided with an arc-shaped part to match the middle spiral part 133.

The torsion spring is used for resetting, and the first spring part 131 and the second spring part 132 of the torsion spring can be reliably connected with the lock base 110 and the lock tongue 120 to prevent ejection.

### Embodiment 5

The locking mechanism 100 of this embodiment is similar to that of Embodiment 3, except for the structure of the resetting part 130 and the installation location of the resetting part 130.

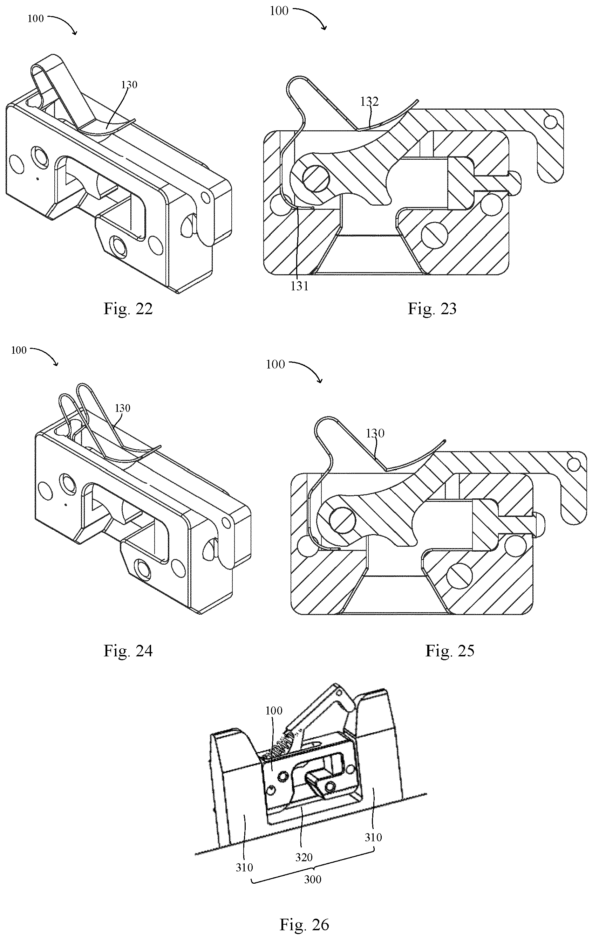

As shown in Figs. 22 and 23, the resetting part 130 is a bending spring, the bending spring is composed of a spring leaf. In this embodiment, the first spring part 131 abuts against at least two non-overlapping inner surfaces of the lock base 110, and the second spring part 132 abuts against the lock tongue 120. In an alternative embodiment, the first spring part may only abut against one inner wall surface of the lock base, but it is conceivable that the effect is not as good as abutting against at least two non-coincident inner wall surfaces.

As shown in Fig. 23, the first spring part 131 is an L-shaped spring part, and the second spring part 132 is an arc-shaped spring part, and between of which are connected through and a flat leaf spring part a U-shaped spring part.

The bending spring is used for resetting, and the first spring part 131 and the second spring part 132 of the bending spring can be reliably connected with the lock base 110 and the lock tongue 120 to prevent ejection.

### Embodiment 6

As shown in Figs. 24-25, the locking mechanism 100 of this embodiment is similar to that of Embodiment 5, and the resetting part 130 is still a bending spring, the only difference is that: in this embodiment, the resetting part 130 is composed of a spring wire.

In an alternative embodiment, the shape of the bending spring may be substantially similar to that of Embodiment 5 or Embodiment 6, but a part of the bending spring may be composed of a spring leaf and the other part is composed of a spring wire, which can achieve the same effect. In an alternative embodiment, the shape of the bending spring may be different from that shown in the figure, and any bending spring capable of undergoing the desired deformation may be adopted.

### Embodiment 7

This embodiment discloses a lock assembly, quick-swap support frame assembly and an electric vehicle.

As shown in Fig. 26, the lock assembly comprises: the locking mechanism 100 as shown in Embodiment 3 and an unlocking mechanism 300. The unlocking mechanism 300 acts on the lock tongue extension part 122 to cause the lock tongue 120 to rotate in an unlocking direction to change from the locked state to the unlocked state. The unlocking direction is opposite to the locking direction, and the unlocking direction is counterclockwise.

Specifically, the unlocking mechanism 300 comprises two limiting parts 310, and the two limiting parts 310 define an accommodating space 320 for accommodating the lock base 110, one limiting part 310 of the two limiting parts 310 acts on the lock tongue extension part 122 to cause the lock tongue 120 to rotate in an unlocking direction to change from the locked state to the unlocked state. During the process of adapting the unlocking mechanism 300 and the locking mechanism 100, one limit part 310 is sufficient to act on the lock tongue extension part 122 to achieve unlocking, and the entire process is rapid and efficient; there is no need to use other parts or other actions to achieve unlocking after the unlocking mechanism 300 is adapted to the locking mechanism 100.

The quick-swap support frame assembly comprises a quick-swap support frame (not shown) and the locking mechanism 100 in Embodiment 3. The locking mechanism 100 is fixed on the quick-swap support frame. The quick-swap support frame is generally a frame-shaped structure, and the locking mechanism 100 is fixed in the frame of the frame-shaped structure. The quick-swap support frame may also be a plate-shaped structure, and the locking mechanism 100 may be fixed to the lower surface of the plate-shaped structure. Generally, one locking mechanism 100 is provided on both the left and right sides of the quick-swap support frame. In the quick-swap support frame assembly, the locking mechanism 100 can be used as a secondary lock, which can be used in conjunction with a primary lock; the primary lock can refer to the "locking device" disclosed in the Chinese Patent Application CN106427514A.

The electric vehicle comprises a battery pack (not shown), the quick-swap support frame assembly and a chassis (not shown). The battery pack is mounted in the quick-swap support frame assembly, and the lock shaft 200 mounted on the battery pack is located within the cavity 112. The quick-swap support frame assembly is fixed to the chassis.

In other embodiments, the locking mechanism 100 described in Embodiment 3 in the lock assembly, the quick-swap support frame assembly and the electric vehicle may be replaced by the locking mechanism 100 described in Embodiment 4 or 5 or 6.

### Embodiment 8

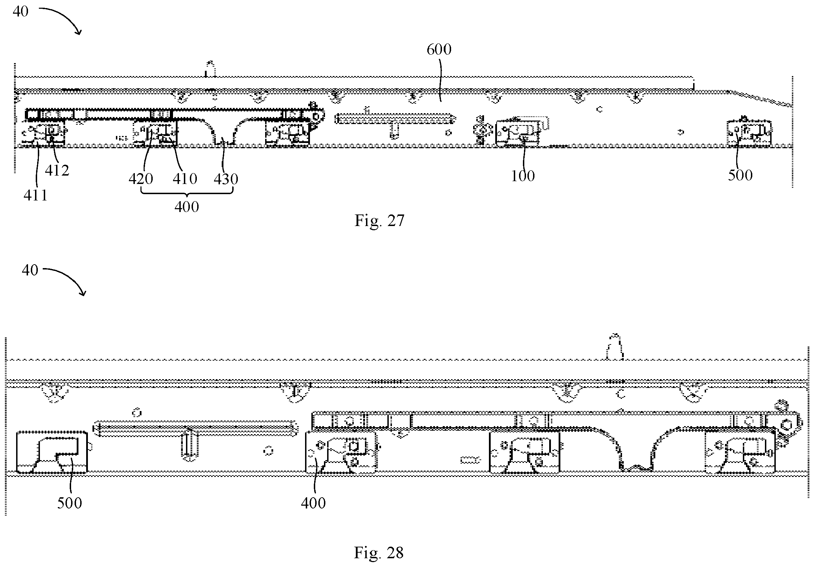

As shown in Figs. 27 and 28, this embodiment discloses a quick-swap support frame assembly 40.

The quick-swap support frame assembly 40 comprises a quick-swap support frame 600, the locking mechanism 100 mentioned in Embodiment 3 (as a secondary locking mechanism), and a primary locking mechanism 400. The locking mechanism 100 is fixed on the quick-swap support frame 600. The primary locking mechanism 400 comprises a lock connecting rod 430, at least one primary lock tongues 420, and at least one primary lock bases 410. The primary lock base 410 is fixed on the quick-swap support frame 600. In this embodiment, the two sides of the frame of the quick-swap support frame 600 are provided with three primary lock bases 410 and three primary lock tongues 420 on each side. Figs. 27 and 28 are partial schematic diagrams on one side.

The primary lock base 410 is provided with a primary opening 411 and a primary cavity 412 extending from the primary opening 411, the primary opening 411 is used for a primary lock shaft (the structure is the same as or similar to the lock shaft 200) mounted on the battery pack to enter the primary cavity 412. The lock connecting rod 430 is rotatably connected with at least one of the primary lock tongues 420, and is used to drive the primary lock tongue 420 to rotate under the action of external force, so that the primary lock tongue 420 can rotate relative to the primary lock base 410 to change between a primary unlocked state and a primary locked state. When the primary lock tongue 420 is in the primary locking state, the primary lock tongue 420 can stop the primary lock shaft from leaving the primary cavity 412 via the primary opening 411. The "primary locked state" refers to the locked state of the primary locking mechanism 400; the "primary unlocked state" refers to the unlocked state of the primary locking mechanism 400.

The primary locking mechanism 400 and the locking mechanism 100 are provided on the same side of the quick-swap support frame 600. That is, the side surface provided with the primary locking mechanism 400 is also provided with the locking mechanism 100; if two side surfaces are both provided with the primary locking mechanism 400, then the two side surfaces are also provided with the locking mechanism 100. In this embodiment, the two sides of the frame of the quick-swap support frame 600, that is, the two inner side surfaces facing the battery pack are provided with a primary locking mechanism 400, and are also provided with locking mechanism 100.

In addition, the quick-swap support frame assembly 40 further comprises a plurality of supporting devices 500, the supporting devices 500 are provided on a side of the quick-swap support frame 600 facing the battery pack, and are used to provide a plurality of support points for supporting the battery pack. The supporting devices 500 are also located on the same side as the primary locking mechanism 400 and the locking mechanism 100. The primary locking mechanism 400 overlaps in Figs. 27 and 28, and Figs. 27 and 28 show the supporting devices 500 in different locations.

In this embodiment, the structure of the supporting devices 500 are similar to that of the lock base 110, and has no locking effect, and only serves as a supporting platform for the battery pack. In other embodiments, other similar supporting mechanisms with supporting platforms may also be applicable. The number of supporting devices 500 can be adjusted according to the weight of the actual battery pack, and it is preferable that the average weight supported by each supporting device 500 does not exceed 25 KG.

The supporting devices 400 are provided with a supporting groove, and the lower surface of the supporting groove is on the same plane as the lower surface of the cavity 112 and the lower surface of the primary cavity 412. The lower surface of the support groove, the lower surface of the cavity 112, and the lower surface of the primary cavity 412 all refer to the surface close to the ground when in use, which bears the support role of the special lock shaft for supporting the battery pack only, the lock shaft 200, and the primary lock shaft, the three are located on the same plane to make the battery pack move smoothly.

The unlocking process and the locking process of the primary locking mechanism 400 and the locking mechanism 100 are similar, and are basically synchronized.

In the description of the present invention, an embodiment may be provided with multiple drawings, and the reference signs of the same parts in the same embodiment may not be marked in each drawing; however, those skilled in the art should understand that when describing one or more drawings in the embodiment, it can be understood in conjunction with other drawings in the embodiment; those skilled in the art should understand that when it is not specified which drawing corresponds to the text, all drawings in this embodiment can be understood.

In the description of the present invention, it should be understood that orientation or position relationship indicated by the terms "upper", "lower", "front", "rear", "left", "right", "vertical", "horizontal", "top", "bottom", "inner", "outer" and so on is based on the orientation or position relationship shown in the drawings, it is only for the convenience of describing the present invention and simplifying the description, rather than indicating or implying that the device or element referred to must have a specific orientation, be constructed and operate in a specific orientation, and therefore cannot be construed as limiting the present invention.

Although the specific embodiments of the present invention have been described above, those skilled in the art should understand that this is only an example, and the protection scope of the present invention is defined by the appended claims. A person skilled in the art can make various changes or modifications to these embodiments without departing from the scope of the invention, defined only by the appended claims.

## Claims

1. A locking mechanism (100) for a battery pack, the locking mechanism (100) comprises:
a lock base (110), the lock base is provided with an opening and a cavity extending from the opening (111), the opening is used for allowing a lock shaft mounted on the battery pack to enter the cavity (112);
a lock tongue (120), the lock tongue (120) is rotatable relative to the lock base so as to shift between an unlocked state and a locked state, and when the lock tongue is in the locked state, the lock tongue is able to stop the lock shaft (200) from leaving the cavity via the opening; and
a resetting part (130), the resetting part (130) is provided on the lock base (110) and acts on the lock tongue, the resetting part is capable of producing a flexible distension and used to cause the lock tongue (120) to rotate in a locking direction so as to reset from the unlocked state to the locked state;
the lock base (110) is further provided with an unlocking hole (114), the locking mechanism further comprises an unlocking component (170), and one end of the unlocking component is in contact with the lock tongue, the unlocking component (170) is capable of acting on the lock tongue to cause the lock tongue to rotate in an unlocking direction to change from the locked state to the unlocked state; **characterized in that**, the unlocking component is provided in the unlocking hole,
the unlocking component (170) comprises an unlocking spring (171), and an unlocking head (172) and an unlocking rod (173) connected to each other, the unlocking hole (114) is a stepped hole, and a stepped part (1141) is provided within the unlocking hole, the inner diameter of the inner end of the unlocking hole is smaller than the inner diameter of the outer end of the unlocking hole, the unlocking spring is at least partially located within the unlocking hole, and two ends of the unlocking spring respectively abut against the unlocking head and the stepped part.

2. The locking mechanism according to claim 1, **characterized in that** the locking mechanism further comprises an inner limiting part (150), when the lock tongue is in the locked state, the inner limiting part abuts against the lock tongue to stop the lock tongue from continuing to rotate in the locking direction;
optionally, the inner limiting part is an inner surface of the cavity (112) defined by the lock base (110).

3. The locking mechanism according to claim 1, **characterized in that** the locking mechanism further comprises a centering shaft (160), the centering shaft is provided on the lock base (110) and passes through the lock tongue (120), and the lock tongue is capable of rotating around the centering shaft (160).

4. The locking mechanism according to claim 1, **characterized in that** the resetting part (130) is a spring, and the resetting part has a contact part (131) and a connection part (132), the connection part (132) is provided on the lock base, and the contact part contacts the lock tongue to act on the lock tongue;
optionally, the resetting part is a torsion spring, the resetting part is further provided with a spiral part (133), and the spiral part is connected to the contact part and the connection part, and both the contact part and the connection part are capable of rotating around the spiral part to achieve the change of the elastic force;
optionally, the locking mechanism further includes a rotating shaft (140), the rotating shaft is provided on the lock base, and the spiral part (133) is sleeved on the rotating shaft.

5. The locking mechanism according to claim 1, **characterized in that** the resetting part is disposed above the lock tongue;
optionally, a groove (115) is provided on the top of the lock base, the groove is in communication with the cavity, and the resetting part is at least partially located within the groove;
optionally, the lock tongue is at least partially located within the groove, and the lock tongue is capable of entering the cavity via the groove.

6. The locking mechanism according to claim 1, **characterized in that** the locking mechanism further comprises an elastic part (160), the elastic part is at least partially located within the cavity, and the elastic part (160) is used to abut against the lock shaft;
optionally, the elastic part comprises an elastic pad, the elastic pad (161) is located within the cavity, and the elastic pad (161) is used to abut against the lock shaft;
optionally, the elastic part further comprises an elastic handle (162) and an elastic head (163), the elastic handle (162) and the elastic head (163) are connected in sequence, the elastic handle (162) passes through the lock base, and the wall part of the lock base is clamped between the elastic pad and the elastic head.

7. The locking mechanism according to claim 1, **characterized in that** the lock base is provided with a positioning hole, the locking mechanism further comprises a positioning pin (150), the positioning pin is partially located outside the positioning hole, and the positioning pin (150) and the positioning hole are in interference fit.

8. The locking mechanism according to claim 1, **characterized in that** the lock base is provided with a mounting hole (118), the mounting hole (118) is threaded hole.

9. The locking mechanism according to any one of claims 1-8, **characterized in that** the opening is a bell mouth.

10. A quick-swap support frame assembly (40), **characterized in that** the quick-swap support frame assembly (40) comprises a quick-swap support frame (600) and the locking mechanism (100) according to any one of claims 1-9, the locking mechanism is fixed on the quick-swap support frame (600).

11. The quick-swap support frame assembly (40) according to claim 10, **characterized in that** the quick-swap support frame assembly (40) further comprises a primary locking mechanism (400), the primary locking mechanism comprises a lock connecting rod (430), at least one primary lock tongues (420), and at least one primary lock bases (410), the primary lock base is fixed on the quick-swap support frame, the primary lock base is provided with a primary opening (411) and a primary cavity (412) extending from the primary opening, the primary opening is used for a primary lock shaft mounted on the battery pack to enter the primary cavity, the lock connecting rod is rotatably connected with at least one of the primary lock tongues, and is used to drive the primary lock tongue to rotate under the action of external force, so that the primary lock tongue can rotate relative to the primary lock base to change between a primary unlocked state and a primary locked state, when the primary lock tongue is in the primary locking state, the primary lock tongue can stop the primary lock shaft from leaving the primary cavity via the primary opening;
optionally, the primary locking mechanism and the locking mechanism are provided on the same side of the quick-swap support frame;
optionally, the quick-swap support frame assembly further comprises a plurality of supporting devices (500), the supporting devices are provided on a side of the quick-swap support frame facing the battery pack, and are used to provide a plurality of support points for supporting the battery pack;
optionally, the supporting devices are provided with a supporting groove, and the lower surface of the supporting groove is on the same plane as the lower surface of the cavity and the lower surface of the primary cavity (412).

12. An electric vehicle, **characterized in that** the electric vehicle comprises a battery pack and the quick-swap support frame assembly according to any one of the claims 10-11, the battery pack is mounted in the quick-swap support frame assembly, and the lock shaft mounted on the battery pack is located within the cavity.

13. The electric vehicle according to claim 12, **characterized in that** the electric vehicle comprises a chassis, and the quick-swap support frame assembly is fixed to the chassis.

## Patentansprüche

1. Ein Verriegelungsmechanismus (100) für einen Batteriesatz, wobei der Verriegelungsmechanismus (100) umfasst:
einen Verriegelungssockel (110), wobei der Verriegelungssockel mit einer Öffnung und einem Hohlraum versehen ist, der sich von der Öffnung (111) aus erstreckt, wobei die Öffnung dazu dient, dass eine auf dem Batteriepack montierte Verriegelungswelle in den Hohlraum (112) eintreten kann;
eine Verriegelungszunge (120), wobei die Verriegelungszunge (120) relativ zu dem Verriegelungssockel drehbar ist, um zwischen einem unverriegelten Zustand und einem verriegelten Zustand zu wechseln, und wenn die Verriegelungszunge in dem verriegelten Zustand ist, die Verriegelungszunge in der Lage ist, die Verriegelungswelle (200) daran zu hindern, den Hohlraum über die Öffnung zu verlassen; und
ein Rückstellteil (130), wobei das Rückstellteil (130) an dem Verriegelungssockel (110) vorgesehen ist und auf die Verriegelungszunge einwirkt, wobei das Rückstellteil in der Lage ist, eine flexible Dehnung zu erzeugen, und verwendet wird, um die Verriegelungszunge (120) zu veranlassen, sich in einer Verriegelungsrichtung zu drehen, um aus dem entriegelten Zustand in den verriegelten Zustand zurückzustellen;
der Verriegelungssockel (110) ist ferner mit einem Entriegelungsloch (114) versehen, wobei der Verriegelungsmechanismus ferner eine Entriegelungskomponente (170) umfasst, und ein Ende der Entriegelungskomponente in Kontakt mit der Verriegelungszunge ist, die Entriegelungskomponente (170) in der Lage ist, auf die Verriegelungszunge einzuwirken, um zu bewirken, dass sich die Verriegelungszunge in einer Entriegelungsrichtung dreht, um von dem verriegelten Zustand in den entriegelten Zustand zu wechseln; **dadurch gekennzeichnet, dass** die Entriegelungskomponente in dem Entriegelungsloch vorgesehen ist,
die Entriegelungskomponente (170) eine Entriegelungsfeder (171) und einen Entriegelungskopf (172) und eine Entriegelungsstange (173) umfasst, die miteinander verbunden sind, wobei das Entriegelungsloch (114) ein gestuftes Loch ist und ein gestuftes Teil (1141) innerhalb des Entriegelungslochs vorgesehen ist, der Innendurchmesser des inneren Endes des Entriegelungslochs kleiner ist als der Innendurchmesser des äußeren Endes des Entriegelungslochs, die Entriegelungsfeder zumindest teilweise innerhalb des Entriegelungslochs angeordnet ist und zwei Enden der Entriegelungsfeder jeweils gegen den Entriegelungskopf und das gestufte Teil anliegen.

2. Verriegelungsmechanismus nach Anspruch 1, **dadurch gekennzeichnet, dass** der Verriegelungsmechanismus ferner ein inneres Begrenzungsteil (150) umfasst, dass, wenn sich die Verriegelungszunge im verriegelten Zustand befindet, an der Verriegelungszunge anliegt, um die Verriegelungszunge daran zu hindern, sich weiter in die Verriegelungsrichtung zu drehen;
optional ist das innere Begrenzungsteil eine Innenfläche des Hohlraums (112), der durch den Verriegelungssockel (110) definiert ist.

3. Verriegelungsmechanismus nach Anspruch 1, **dadurch gekennzeichnet, dass** der Verriegelungsmechanismus ferner eine Zentrierwelle (160) umfasst, wobei die Zentrierwelle an dem Verriegelungssockel (110) vorgesehen ist und durch die Verriegelungszunge (120) hindurchgeht, und die Verriegelungszunge in der Lage ist, sich um die Zentrierwelle (160) zu drehen.

4. Verriegelungsmechanismus nach Anspruch 1, **dadurch gekennzeichnet, dass** das Rückstellteil (130) eine Feder ist und das Rückstellteil ein Kontaktteil (131) und ein Verbindungsteil (132) aufweist, wobei das Verbindungsteil (132) an dem Verriegelungssockel vorgesehen ist und das Kontaktteil die Verriegelungszunge berührt, um auf die Verriegelungszunge einzuwirken;
optional ist das Rückstellteil eine Torsionsfeder, das Rückstellteil ist ferner mit einem spiralförmigen Teil (133) versehen, und das spiralförmige Teil ist mit dem Kontaktteil und dem Verbindungsteil verbunden, und sowohl das Kontaktteil als auch das Verbindungsteil sind in der Lage, sich um das spiralförmige Teil zu drehen, um die Änderung der elastischen Kraft zu erreichen;
optional umfasst der Verriegelungsmechanismus außerdem eine Drehwelle (140), wobei die Drehwelle an dem Verriegelungssockel vorgesehen ist und das Spiralteil (133) auf der Drehwelle gelagert ist.

5. Verriegelungsmechanismus nach Anspruch 1, **dadurch gekennzeichnet, dass** das Rückstellteil oberhalb der Verriegelungszunge angeordnet ist; optional ist eine Nut (115) auf der Oberseite des Verriegelungssockels vorgesehen, wobei die Nut mit dem Hohlraum in Verbindung steht, und das Rückstellteil befindet sich zumindest teilweise in der Nut;
optional befindet sich die Verriegelungszunge zumindest teilweise in der Nut, und die Verriegelungszunge kann über die Nut in den Hohlraum eindringen.

6. Verriegelungsmechanismus nach Anspruch 1, **dadurch gekennzeichnet, dass** der Verriegelungsmechanismus ferner ein elastisches Teil (160) umfasst, wobei das elastische Teil zumindest teilweise innerhalb des Hohlraums angeordnet ist und das elastische Teil (160) dazu verwendet wird, an der Verriegelungswelle anzuliegen;
optional umfasst das elastische Teil ein elastisches Kissen, wobei sich das elastische Kissen (161) in dem Hohlraum befindet, und das elastische Kissen (161) verwendet wird, um gegen die Verriegelungswelle zu stoßen;
optional umfasst das elastische Teil weiterhin einen elastischen Griff (162) und einen elastischen Kopf (163), wobei der elastische Griff (162) und der elastische Kopf (163) nacheinander verbunden sind, wobei der elastische Griff (162) durch den Verriegelungssockel läuft, und der Wandteil des Verriegelungssockels zwischen dem elastischen Kissen und dem elastischen Kopf eingeklemmt ist.

7. Verriegelungsmechanismus nach Anspruch 1, **dadurch gekennzeichnet, dass** der Verriegelungssockel mit einem Positionierungsloch versehen ist, wobei der Verriegelungsmechanismus ferner einen Positionierungsstift (150) umfasst, wobei der Positionierungsstift teilweise außerhalb des Positionierungslochs angeordnet ist und der Positionierungsstift (150) und das Positionierungsloch in Presspassung sind.

8. Verriegelungsmechanismus nach Anspruch 1, **dadurch gekennzeichnet, dass** der Verriegelungssockel mit einem Montageloch (118) versehen ist, wobei das Montageloch (118) ein Gewindeloch ist.

9. Verriegelungsmechanismus nach einem der Ansprüche 1-8, **dadurch gekennzeichnet, dass** die Öffnung eine Glockenmündung ist.

10. Schnellwechsel-Stützrahmenanordnung (40), **dadurch gekennzeichnet, dass** die Schnellwechsel-Stützrahmenanordnung (40) einen Schnellwechsel-Stützrahmen (600) und den Verriegelungsmechanismus (100) nach einem der Ansprüche 1 bis 9 umfasst, wobei der Verriegelungsmechanismus an dem Schnellwechsel-Stützrahmen (600) befestigt ist.

11. Schnellwechsel-Stützrahmenanordnung (40) nach Anspruch 10, **dadurch gekennzeichnet, dass** die Schnellwechsel-Stützrahmenanordnung (40) ferner einen primären Verriegelungsmechanismus (400) umfasst, wobei der primäre Verriegelungsmechanismus eine Verriegelungsverbindungsstange (430), mindestens eine primäre Verriegelungszunge (420) und mindestens einen primären Verriegelungssockel (410) umfasst, wobei der primäre Verriegelungssockel an dem Schnellwechsel-Stützrahmen befestigt ist, wobei der primäre Verriegelungssockel mit einer primären Öffnung (411) und einem primären Hohlraum (412) versehen ist, der sich von der primären Öffnung aus erstreckt, wobei die primäre Öffnung für eine primäre Verriegelungswelle verwendet wird, die an dem Batteriepack montiert ist, um in den primären Hohlraum einzutreten, die Verriegelungsverbindungsstange drehbar mit mindestens einer der primären Verriegelungszungen verbunden ist und verwendet wird, um die primäre Verriegelungszunge anzutreiben, um sich unter der Wirkung einer externen Kraft zu drehen, so dass die primäre Verriegelungszunge sich relativ zu dem primären Verriegelungssockel dreht, um zwischen einem primär entriegelten Zustand und einem primär verriegelten Zustand zu wechseln, wenn die primäre Verriegelungszunge in dem primären Verriegelungszustand ist, kann die primäre Verriegelungszunge die primäre Verriegelungswelle daran hindern, den primären Hohlraum über die primäre Öffnung zu verlassen;
optional sind der primäre Verriegelungsmechanismus und der Verriegelungsmechanismus auf der gleichen Seite des Schnellwechsel-Stützrahmens vorgesehen;
optional umfasst die Schnellwechsel-Stützrahmenanordnung ferner eine Vielzahl von Stützvorrichtungen (500), wobei die Stützvorrichtungen auf einer Seite des Schnellwechsel-Stützrahmens vorgesehen sind, die dem Batteriepack zugewandt ist, und verwendet werden, um eine Vielzahl von Stützpunkten zum Stützen des Batteriepacks bereitzustellen;
optional sind die Stützvorrichtungen mit einer Stütznut versehen, und die untere Fläche der Stütznut liegt auf derselben Ebene wie die untere Fläche des Hohlraums und die untere Fläche des primären Hohlraums (412).

12. Elektrofahrzeug, **dadurch gekennzeichnet, dass** das Elektrofahrzeug ein Batteriepack und die Schnellwechsel-Stützrahmenanordnung nach einem der Ansprüche 10 bis 11 umfasst, wobei das Batteriepack in der Schnellwechsel-Stützrahmenanordnung montiert ist und die an dem Batteriepack montierte Verriegelungswelle in dem Hohlraum angeordnet ist.

13. Elektrofahrzeug nach Anspruch 12, **dadurch gekennzeichnet, dass** das Elektrofahrzeug ein Fahrgestell umfasst und die Schnellwechsel-Stützrahmenanordnung an dem Fahrgestell befestigt ist.

## Revendications

1. Mécanisme de verrouillage (100) pour un bloc-batterie, le mécanisme de verrouillage (100) comprend :
une base de serrure (110), la base de serrure est pourvue d'une ouverture et d'une cavité s'étendant depuis l'ouverture (111), l'ouverture est utilisée pour permettre à un arbre de serrure monté sur le bloc-batterie d'entrer dans la cavité (112) ;
un pêne de serrure (120), le pêne de serrure (120) est rotatif par rapport à la base de serrure de manière à passer entre un état déverrouillé et un état verrouillé, et lorsque le pêne de serrure est dans l'état verrouillé, le pêne de serrure est apte à empêcher l'arbre de serrure (200) de sortir de la cavité à travers l'ouverture ; et
une partie de réinitialisation (130), la partie de réinitialisation (130) est prévue sur la base de serrure (110) et agit sur le pêne de serrure, la partie de réinitialisation est capable de produire une distension flexible et est utilisée pour amener le pêne de serrure (120) à tourner dans une direction de verrouillage de manière à réinitialiser de l'état déverrouillé à l'état verrouillé ;
la base de serrure (110) est en outre pourvue d'un trou de déverrouillage (114), le mécanisme de verrouillage comprend en outre un composant de déverrouillage (170), et une extrémité du composant de déverrouillage est en contact avec le pêne de serrure, le composant de déverrouillage (170) est capable d'agir sur le pêne de serrure pour amener le pêne de serrure à tourner dans une direction de déverrouillage pour passer de l'état verrouillé à l'état déverrouillé ; **caractérisé en ce que** le composant de déverrouillage est prévu dans le trou de déverrouillage,
le composant de déverrouillage (170) comprend un ressort de déverrouillage (171), et une tête de déverrouillage (172) et une tige de déverrouillage (173) reliées l'une à l'autre, le trou de déverrouillage (114) est un trou étagé, et une partie étagée (1141) est prévue à l'intérieur du trou de déverrouillage, le diamètre intérieur de l'extrémité intérieure du trou de déverrouillage est inférieur au diamètre intérieur de l'extrémité extérieure du trou de déverrouillage, le ressort de déverrouillage est au moins partiellement situé à l'intérieur du trou de déverrouillage, et deux extrémités du ressort de déverrouillage viennent respectivement en butée contre la tête de déverrouillage et la partie étagée.

2. Mécanisme de verrouillage selon la revendication 1, **caractérisé en ce que** le mécanisme de verrouillage comprend en outre une partie de limitation intérieure (150), lorsque le pêne de serrure est dans l'état verrouillé, la partie de limitation intérieure vient en butée contre le pêne de serrure pour empêcher le pêne de serrure de continuer à tourner dans la direction de verrouillage ;
facultativement, la partie de limitation intérieure est une surface intérieure de la cavité (112) définie par la base de serrure (110).

3. Mécanisme de verrouillage selon la revendication 1, **caractérisé en ce que** le mécanisme de verrouillage comprend en outre un arbre de centrage (160), l'arbre de centrage est prévu sur la base de serrure (110) et passe à travers le pêne de serrure (120), et le pêne de serrure est capable de tourner autour de l'arbre de centrage (160).

4. Mécanisme de verrouillage selon la revendication 1, **caractérisé en ce que** la partie de réinitialisation (130) est un ressort, et la partie de réinitialisation comporte une partie de contact (131) et une partie de liaison (132), la partie de liaison (132) est prévue sur la base de serrure, et la partie de contact vient en contact avec le pêne de serrure pour agir sur le pêne de serrure ;
facultativement, la partie de réinitialisation est un ressort de torsion, la partie de réinitialisation est en outre pourvue d'une partie en spirale (133), et la partie en spirale est reliée à la partie de contact et à la partie de liaison, et à la fois la partie de contact et la partie de liaison sont capables de tourner autour de la partie en spirale pour effectuer le changement de la force élastique ;
facultativement, le mécanisme de verrouillage comprend en outre un arbre de rotation (140), l'arbre de rotation est prévu sur la base de serrure, et la partie en spirale (133) est emmanchée sur l'arbre de rotation.

5. Mécanisme de verrouillage selon la revendication 1, **caractérisé en ce que** la partie de réinitialisation est disposée au-dessus du pêne de serrure ;
facultativement, une rainure (115) est prévue au sommet de la base de serrure, la rainure est en communication avec la cavité, et la partie de réinitialisation est au moins partiellement située à l'intérieur de la rainure ; facultativement, le pêne de serrure est au moins partiellement situé à l'intérieur de la rainure, et le pêne de serrure est capable d'entrer dans la cavité à travers la rainure.

6. Mécanisme de verrouillage selon la revendication 1, **caractérisé en ce que** le mécanisme de verrouillage comprend en outre une partie élastique (160), la partie élastique est au moins partiellement située à l'intérieur de la cavité, et la partie élastique (160) est utilisée pour venir en butée contre l'arbre de serrure ;
facultativement, la partie élastique comprend un tampon élastique, le tampon élastique (161) est situé à l'intérieur de la cavité, et le tampon élastique (161) est utilisé pour venir en butée contre l'arbre de serrure ; facultativement, la partie élastique comprend en outre une poignée élastique (162) et une tête élastique (163), la poignée élastique (162) et la tête élastique (163) sont reliées dans l'ordre, la poignée élastique (162) passe à travers la base de serrure, et la partie de paroi de la base de serrure est serrée entre le tampon élastique et la tête élastique.

7. Mécanisme de verrouillage selon la revendication 1, **caractérisé en ce que** la base de serrure est pourvue d'un trou de positionnement, le mécanisme de verrouillage comprend en outre une broche de positionnement (150), la broche de positionnement est partiellement située à l'extérieur du trou de positionnement, et la broche de positionnement (150) et le trou de positionnement sont en ajustement serré.

8. Mécanisme de verrouillage selon la revendication 1, **caractérisé en ce que** la base de serrure est pourvue d'un trou de montage (118), le trou de montage (118) est un trou fileté.

9. Mécanisme de verrouillage selon l'une quelconque des revendications 1 à 8, **caractérisé en ce que** l'ouverture est un orifice évasé.

10. Ensemble cadre de support à remplacement rapide (40), **caractérisé en ce que** l'ensemble cadre de support à remplacement rapide (40) comprend un cadre de support à remplacement rapide (600) et le mécanisme de verrouillage (100) selon l'une quelconque des revendications 1 à 9, le mécanisme de verrouillage est fixé sur le cadre de support à remplacement rapide (600).

11. Ensemble cadre de support à remplacement rapide (40) selon la revendication 10, **caractérisé en ce que** l'ensemble cadre de support à remplacement rapide (40) comprend en outre un mécanisme de verrouillage primaire (400), le mécanisme de verrouillage primaire comprend une bielle de serrure (430), au moins un pêne de serrure primaire (420), et au moins une base de serrure primaire (410), la base de serrure primaire est fixée sur le cadre de support à remplacement rapide, la base de serrure primaire est pourvue d'une ouverture primaire (411) et d'une cavité primaire (412) s'étendant depuis l'ouverture primaire, l'ouverture primaire est utilisée pour permettre à un arbre de serrure primaire monté sur le bloc-batterie d'entrer dans la cavité primaire, la bielle de serrure est reliée de manière rotative à au moins l'un des pênes de serrure primaires, et est utilisée pour amener le pêne de serrure primaire à tourner sous l'action d'une force externe, de sorte que le pêne de serrure primaire puisse tourner par rapport à la base de serrure primaire pour passer entre un état déverrouillé primaire et un état verrouillé primaire, lorsque le pêne de serrure primaire est dans l'état de verrouillage primaire, le pêne de serrure primaire peut empêcher l'arbre de serrure primaire de sortir de la cavité primaire à travers l'ouverture primaire ;
facultativement, le mécanisme de verrouillage primaire et le mécanisme de verrouillage sont prévus du même côté du cadre de support à remplacement rapide ;
facultativement, l'ensemble cadre de support à remplacement rapide comprend en outre une pluralité de dispositifs de support (500), les dispositifs de support sont prévus sur un côté du cadre de support à remplacement rapide faisant face au bloc-batterie, et sont utilisés pour fournir une pluralité de points de support pour supporter le bloc-batterie ;
facultativement, les dispositifs de support sont pourvus d'une rainure de support, et la surface inférieure de la rainure de support est sur le même plan que la surface inférieure de la cavité et la surface inférieure de la cavité primaire (412).

12. Véhicule électrique, **caractérisé en ce que** le véhicule électrique comprend un bloc-batterie et l'ensemble cadre de support à remplacement rapide selon l'une quelconque des revendications 10 et 11, le bloc-batterie est monté dans l'ensemble cadre de support à remplacement rapide, et l'arbre de serrure monté sur le bloc-batterie est situé à l'intérieur de la cavité.

13. Véhicule électrique selon la revendication 12, **caractérisé en ce que** le véhicule électrique comprend un châssis, et l'ensemble cadre de support à remplacement rapide est fixé au châssis.
